# EUROPEAN PATENT APPLICATION

(11) **EP 4 734 166 A1**
(43) Date of publication of application: **29.04.2026**
(21) Application number: 25209208.5
(22) Date of filing: 19.10.2021
(51) Int. Cl.: H01M 4/131, H01M 4/62, H01M 4/1391, H01M 4/04, H01M 10/052, H01M 4/505, H01M 4/525, H01M 4/02

(54) **ELECTRODE FOR SECONDARY BATTERY, SECONDARY BATTERY INCLUDING THE SAME, AND METHOD OF MANUFACTURING ELECTRODE**

(30) Priority: 26.10.2020 KR 20200139305; 15.10.2021 KR 20210137513
(62) Divisional of application: 21886658.0
(71) Applicant: LG Energy Solution, Ltd., Seoul 07335 (KR)
(72) Inventor: KIM, Myeongsoo, 34122 DAEJEON (KR); KIM, Jeonggil, 34122 DAEJEON (KR); KIM, Taegon, 34122 DAEJON (KR)
(74) Representative: Plasseraud IP

(57) **Abstract**

An electrode for secondary battery according to an embodiment of the present disclosure includes an electrode current collector; and an electrode layer located on the electrode current collector, wherein the electrode layer comprises an electrode composition in which an active material, a conductive material, and a binder are dry-mixed, wherein the binder comprises a first binder and a second binder, with the first binder and the second binder being different from each other, and wherein the second binder is attached to the surface of the first binder.

## Description

### [TECHNICAL FIELD]

### Cross Citation with Related Application(s)

This application claims the benefit of Korean Patent Application No. 10-2020-0139305 filed on October 26, 2020 and Korean Patent Application No. 10-2021-0137513 filed on October 15, 2021 in the Korean Intellectual Property Office, the disclosures of which are incorporated herein by reference in their entirety.

The present disclosure relates to an electrode for secondary battery, a secondary battery including same, and a method of manufacturing an electrode, and more particularly, to an electrode for secondary battery having improved tensile strength and resistance reduction effect, a secondary battery including same, and a method of manufacturing an electrode.

### [BACKGROUND]

Along with the technology development and increased demand for mobile devices, demand for secondary batteries as energy sources has been rapidly increasing. Among these secondary batteries, a lithium secondary battery having high energy density and a high voltage, a long cycle lifespan, and a low self-discharge rate is commercially available and widely used.

In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, research on the use of a lithium secondary battery having high energy density is actively being conducted, a part of which are in the commercialization stage.

Conventional electrodes for secondary batteries are manufactured in a wet manner. However, when the electrode is manufactured in a wet manner, a heat treatment process at a high temperature is essentially required, and there is a risk that the metal oxide may be damaged. Therefore, there is a growing need to develop an electrode manufactured in a dry manner.

### [DETAILED DESCRIPTION OF THE INVENTION]

### [Technical Problem]

It is an object of the present disclosure to provide an electrode for secondary battery having improved tensile strength and resistance reduction effect, a secondary battery including same, and a method of manufacturing an electrode.

The objects of the present disclosure are not limited to the aforementioned objects, and other objects which are not described herein should be clearly understood by those skilled in the art from the following detailed description and the accompanying drawings.

### [Technical Solution]

According to an embodiment of the present disclosure, there is provided an electrode for secondary battery comprising: an electrode current collector; and an electrode layer located on the electrode current collector, wherein the electrode layer comprises an electrode composition in which an active material, a conductive material, and a binder are dry-mixed, wherein the binder comprises a first binder and a second binder, with the first binder and the second binder being different from each other, and wherein the second binder is attached to the surface of the first binder.

A glass transition temperature (T_{g}) of the second binder may be larger than a glass transition temperature (T_{g}) of the first binder.

The glass transition temperature (T_{g}) of the first binder may be 15 degrees Celsius or more and 100 degrees Celsius or less, and the glass transition temperature (T_{g}) of the second binder may be 25 degrees Celsius or more and 115 degrees Celsius or less. A content of the binder may be 0.51% by weight or more and 11.99% by weight or less based on the total weight of the electrode composition.

A content ratio of the first binder and the second binder may have a ratio of 0.1:10 to 10:0.1.

The first binder may include polytetrafluoroethylene (PTFE), and the second binder may include an acrylic polymer material.

The active material may include at least one selected from the group consisting of lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound; Fe₂(MoO₄)₃, and lithium manganese oxide (LMO). The electrode composition is manufactured into a freestanding film, and the freestanding film may be attached onto the electrode current collector.

The freestanding film may have a tensile strength of 5kgf/cm² or more and 50kgf/cm² or less.

According to another embodiment of the present disclosure, there is provided a method of manufacturing an electrode for secondary battery, the method comprising the steps of: dry-mixing an active material, a conductive material and a binder to prepare a mixture; applying a shearing force to the mixture to prepare an electrode composition; manufacturing a freestanding film with the electrode composition; and attaching the freestanding film onto the electrode current collector to form an electrode for secondary battery, wherein the binder comprises a first binder and a second binder, with the first binder and the second binder being different from each other, and wherein the second binder is attached to the surface of the first binder.

A glass transition temperature (T_{g}) of the second binder may be larger than a glass transition temperature (T_{g}) of the first binder.

The glass transition temperature (T_{g}) of the first binder may be 15 degrees Celsius or more and 100 degrees Celsius or less, and the glass transition temperature (T_{g}) of the second binder may be 25 degrees Celsius or more and 115 degrees Celsius or less. The step of dry-mixing an active material, a conductive material and a binder to prepare a mixture may be performed at room temperature, and the step of applying a shearing force to the mixture to prepare an electrode composition may be performed at a temperature of 100 degrees Celsius or more.

The content of the binder may be 0.51% by weight or more and 11.99% by weight or less based on the total weight of the electrode composition.

A content ratio of the first binder and the second binder may have a ratio of 0.1:10 to 10:0.1.

The first binder may include polytetrafluoroethylene (PTFE), and the second binder may include an acrylic polymer material.

The active material may include at least one selected from the group consisting of lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound; Fe₂(MoO₄)₃, and lithium manganese oxide (LMO).

According to yet another embodiment of the present disclosure, there is provided a secondary battery comprising the above-mentioned electrode for secondary battery.

### [Advantageous Effects]

According to embodiments of the present disclosure, an electrode for secondary battery and a secondary battery including the same are manufactured by using electrode compositions including mutually different binders, whereby the tensile strength of the electrode can be improved, and the resistance reduction effect of the secondary battery including the electrode can be improved.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing an electrode composition of an electrode for secondary battery according to an embodiment of the disclosure;
Fig. 2 is a flowchart showing a method of manufacturing an electrode for secondary battery according to an embodiment of the present disclosure;
Fig. 3 is a graph for comparing a tensile strength and an initial discharge capacity according to the binder content of an electrode for secondary battery, in Examples and Comparative Examples of the present disclosure;
Fig. 4 is a graph for comparing a tensile strength and an initial discharge capacity according to the content ratio of the first binder and the second binder of an electrode for secondary battery, in Examples and Comparative Examples of the present disclosure; and
Fig. 5 is a graph for comparing a tensile strength and an initial discharge capacity according to a glass transition temperature of the first binder and the second binder of an electrode for secondary battery, in Examples and Comparative Examples of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Now, an electrode for secondary battery according to an embodiment of the present disclosure will be described.

The electrode for secondary battery according to an embodiment of the present disclosure includes an electrode current collector; and an electrode layer formed of a freestanding film on the electrode current collector. The electrode layer includes an electrode composition in which an active material, a conductive material, and a binder are dry-mixed.

The electrode layer may be formed by a lamination process after being first produced into a freestanding film, and attaching the freestanding film onto the electrode current collector. Here, the freestanding film may have a tensile strength of 5 kgf/cm² or more and 50 kgf/cm² or less.

Thereby, the freestanding film may be in a state in which the active material, the conductive material, the first binder and the second binder included in the electrode composition are mixed with each other with high binding force, and the freestanding film may be easily stored in the form of a roll. Therefore, it may be effective in increasing the productivity and improving the flexibility of the electrode. However, when the tensile strength of the freestanding film is less than 5kgf/cm², during charge and discharge, cracks are generated between the electrode active materials in the electrode, which causes a problem that the resistance is increased, the electrical conductivity is decreased, and the lifetime characteristics are also reduced.

Next, each component included in the electrode for secondary battery according to an embodiment of the present disclosure will be described in detail.

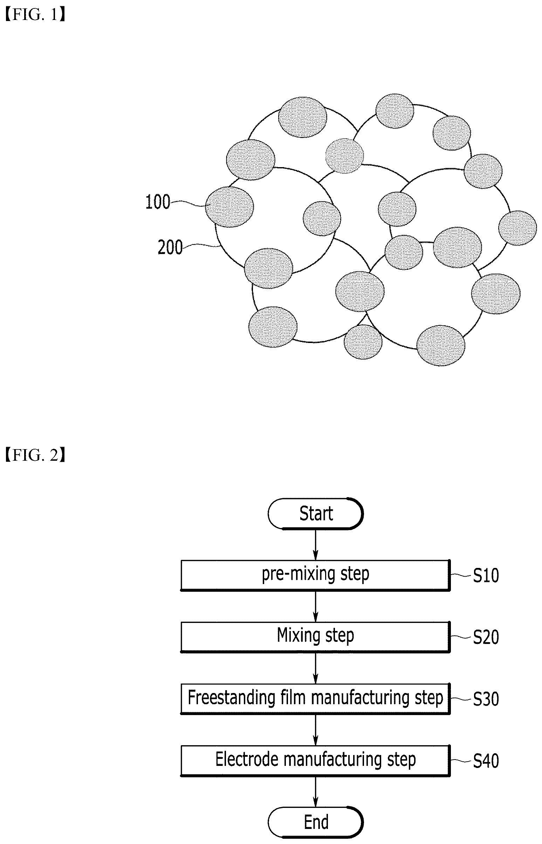

Fig. 1 is a diagram showing an electrode composition of an electrode for secondary battery according to an embodiment of the disclosure.

Referring to Fig. 1, the electrode for secondary battery according to the present embodiment may include a first binder 100 and a second binder 200 as a binder. The first binder 100 and the second binder 200 may be different from each other. Here, the first binder 100 and the second binder 200 performs the role of improving adhesion between active material particles and an adhesive force between the active material and the current collector. Here, the second binder 200 may be attached to the surface of the first binder 100.

Therefore, in the electrode for secondary battery according to an embodiment of the present disclosure, the first binder 100 may be spaced apart from each other by the second binder 200. Thereby, contact between the first binders 100 is prevented, and an agglomeration phenomenon of the first binders 100 may be reduced. Further, without interfering with the bridging effect between the active material particles by the first binder 100 or the bridging effect between the active material particles and the current collector, the dispersibility of the first binder 100 can be improved, and the tensile strength and flexibility of the electrode can also be improved.

In one example, the first binder 100 may include polytetrafluoroethylene (PTFE). Here, polytetrafluoroethylene (PTFE) has a characteristic that the fibers are pulled out from the particles as a shearing force is applied. That is, in the electrode for secondary battery according to an embodiment of the present disclosure, a strong shearing force is applied to the electrode composition containing polytetrafluoroethylene (PTFE), so that the electrode composition can be mixed by a physical mixing method in accordance with the fiberization of polytetrafluoroethylene (PTFE).

Therefore, in the electrode for secondary battery according to an embodiment of the present disclosure, the electrode composition may be dry-mixed without a separate solvent or additive, whereby it is very effective for bridging between active material particles or bridging between active material particles and a current collector, and also can prevent damage to the active material that occurs during the heat treatment process at high temperature according to the existing mixing method.

In one example, the second binder 200 may include an acrylic polymer material. Here, the acrylic polymer material includes an acrylic acid-based polymer and an acrylate-based polymer, and at least one of them may be selected and used. In one example, the second binder 200 may be at least one selected from the group consisting of poly acrylic acid (PAA), methyl acrylate (MA), ethyl acrylate (EA), butyl acrylate (BA), ethyl hexyl acrylate (EHA), and methyl methacrylate (MMA).

Further, the glass transition temperature (T_{g}) of the second binder 200 may be larger than the glass transition temperature (T_{g}) of the first binder (100). Here, the glass transition temperature (T_{g}) of the second binder 200 may be higher than room temperature. Generally, the room temperature may mean a temperature having an error range of 5 degrees Celsius based on the standard temperature of 20 degrees Celsius.

More specifically, the glass transition temperature (T_{g}) of the first binder 100 may be 15 degrees Celsius or more and 100 degrees Celsius or less, and the glass transition temperature (T_{g}) of the second binder 200 may be 25 degrees Celsius or more and 115 degrees Celsius or less. In one example, the glass transition temperature (T_{g}) of the first binder 100 is 15 degrees Celsius or more and 95 degrees Celsius or less, and the glass transition temperature (T_{g}) of the second binder 200 may be 30 degrees Celsius or more and 110 degrees Celsius or less.

Here, the glass transition temperature (T_{g}) can be generally measured by a measurement method such as DSC, DMA or TMA. For example, in the present embodiment, the glass transition temperature (T_{g}) is measured by the DSC measuring method, wherein the applicable standard may be ISO 11357-2. Further, a TA Instrument Q20 can be used as a measuring equipment., and the measurement is performed at a temperature range of -50 ~ 200°C and a temperature rise rate of 20°C/min, and the analysis is performed using the secondary heating curve, wherein the determination of the glass transition temperature (T_{g}) can use the inflection point method.

Therefore, in the electrode for secondary battery according to an embodiment of the present disclosure, the first binder 100 and the second binder 200 have a glass transition temperature in the above range, and the second binder 200 is attached to the surface of the first binder 100 in a state in which the second binder 200 is not melted at room temperature, and thus, an agglomeration phenomenon of the first binder 100 can be prevented.

Further, when the temperature rises in a subsequent electrode manufacturing process and becomes more than the glass transition temperature (T_{g}) of the second binder 200, the second binder 200 may be melted and so the fiberization of the first binder 100 may proceed, whereby bridging between the active material particles or bridging between the active material particles and the current collector can be performed.

That is, the first binder 100 and the second binder 200 can effectively adjust the fiberization time of the first binder 100 through the glass transition temperature (T_{g}) in the above range.

On the other hand, when the glass transition temperature (T_{g}) of the second binder 200 is lower than the glass transition temperature (T_{g}) of the first binder 100, the second binder 200 is melted before the first binder 100 and thus, the second binder 200 remaining on the surface of the first binder 100 is reduced or eliminated. In this case, there is no problem that the timing of fiberization of the first binder 100 cannot be adjusted, and when the glass transition temperature (T_{g}) of the first binder 100 is lower than room temperature, there is a problem that the fiberization of the first binder 100 proceeds at room temperature, and it is difficult to prevent an agglomeration phenomenon of the first binder 100.

In addition, when the glass transition temperature (T_{g}) of the first binder 100 and the second binder 200 is lower than the above temperature range, at least a portion of the second binder 200 is melted at room temperature, and the fiberization of the first binder 100 is performed at room temperature, and it is difficult to prevent an agglomeration phenomenon of the first binder 100. Thereby, the bridging effect between particles inside the electrode composition may be reduced, and the tensile strength may also be greatly reduced.

On the contrary, when the glass transition temperature (T_{g}) of the first binder 100 and the second binder 200 is higher than the above temperature range, in the electrode manufacturing process, there is a problem that the manufacturing time, the manufacturing equipment, etc. required in the process of raising the temperature to melt the first binder 100 and the second binder 200 are additionally required, and the fiberization of the first binder 100 also does not proceed.

Further, the content of the binders 100 and 200 may be 0.51% by weight or more and 11.99% by weight or less based on the total weight of the electrode composition. More preferably, the content of the binders 100 and 200 may be 1% by weight or more and 11% by weight or less based on the total weight of the electrode composition. In one example, the content of the binders 100 and 200 may be 1% by weight or more and 10% by weight or less based on the total weight of the electrode composition.

Therefore, the electrode for secondary battery according to the present embodiment contains the binder within the above-mentioned range, whereby the fiberization of the binder can be maximized, and the bridging effect between particles inside the electrode composition can be excellent, and thus the tensile strength can be excellent. In addition to this, it is possible to prevent an agglomeration phenomenon of the binder and improve the dispersibility, and thus can be excellent in the resistance reduction effect of the electrode containing the above electrode composition.

Unlike the same, when the total content of the binders 100 and 200 is less than 0.51% by weight, the bridging effect between particles inside the electrode composition is reduced and thus, the tensile strength may also be greatly reduced. Further, when the content of the binders 100 and 200 is more than 11.9% by weight, in the electrode including the electrode composition, the first binder and the second binder act as a resistance, which causes a problem that it is difficult to expect high output.

Further, the content ratio of the first binder 100 and the second binder 200 may be 0.1:10 to 10:0.1. More preferably, the content ratio of the first binder 100 and the second binder 200 may be 0.5:10 to 10:0.5. In one example, the content ratio of the first binder 100 and the second binder 200 may be 1:10 to 10:1.

Therefore, the electrode for secondary battery according to the present embodiment contains the first binder 100 and the second binder 200 within the above range, whereby the fiberization of the binder can be maximized, the bridging effect between particles inside the electrode composition can be excellent, and thus the tensile strength can be excellent. In addition to this, it is possible to prevent an agglomeration phenomenon of the binder and improve the dispersibility, and thus can be excellent in the resistance reduction effect of the electrode containing the above electrode composition.

Unlike the same, when the content ratio of the first binder 100 and the second binder 200 is less than 0.1 and more than 10, the degree of fibrillation of the binder is reduced, and when only the second binder 200 is included, there is a problem that it is impossible to manufacture the electrode. Further, when the content ratio of the first binder 100 and the second binder 200 is more than 10 and less than 0.1, the agglomeration phenomenon of the binder is well generated, the resistance reduction effect of the electrode can be reduced, and the battery performance can also be deteriorated.

The active material may be a positive electrode active material. The positive active material may include, for example, lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound; Fe₂(MoO₄)₃, and the like.

In one example, the active material may include lithium manganese oxide (LMO). Here, the active material may be contained in an amount of 85% by weight to 99% by weight based on the total weight of the electrode composition. More preferably, the active material may be contained in an amount of 87% by weight to 98% by weight based on the total weight of the electrode composition. In one example, the active material may be contained in an amount of 89% by weight to 97% by weight based on the total weight of the electrode composition.

The conductive material is used to impart conductivity to the electrode, and the conductive material can be used without particular limitation as long as it has electronic conductivity without causing chemical changes in the battery to be configured. Specific examples thereof include carbon-based materials such as carbon black, acetylene black, ketjen black, channel black, furnace black, lamp black, thermal black, carbon graphene and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and these may be used either singly or as a mixture of two or more. Here, the conductive material may be contained in an amount of 1% by weight to 10% by weight based on the total weight of the electrode.

The above-mentioned electrode for secondary battery may be included as a positive electrode in a secondary battery according to another embodiment of the present disclosure. More specifically, the secondary battery according to another embodiment of the present disclosure may include an electrode assembly including a positive electrode, a negative electrode, and a separator interposed between the positive electrode and the negative electrode, and an electrolyte.

The negative electrode can be manufactured by applying a negative electrode slurry including a negative electrode active material, a polymer material, a conductive material and the like to the negative electrode current collector, similarly to the electrode for secondary battery.

The negative electrode can also be manufactured in a form in which the negative electrode slurry including the negative electrode active material is attached or applied onto the negative electrode current collector, and the negative electrode slurry may further include the conductive material and polymer material as described above, together with the negative electrode active material.

A negative electrode active material for a lithium secondary battery, which is common in the art, can be used as the negative electrode active material. In one example. a material such as lithium metal, lithium alloy, petroleum coke, activated carbon, graphite, silicon, tin, metal oxide or other carbons may be used.

The negative electrode current collector is not particularly limited as long as it has high conductivity without causing chemical changes to the battery. For example, copper, stainless steel, aluminum, nickel, titanium, calcined carbon, copper or stainless steel having a surface treated with carbon, nickel, titanium, silver, etc., aluminum-cadmium alloy, and the like can be used.

The separator separates the negative electrode and the positive electrode, and provides a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. In addition, the electrolyte solution used herein may include an organic liquid electrolyte, an inorganic liquid electrolyte, a solid polymer electrolyte, a gel type polymer electrolyte, a solid inorganic electrolyte, a molten inorganic electrolyte or the like which can be used in the production of a lithium secondary battery, but is not limited thereto.

Specifically, the electrolyte solution may include an organic solvent and a lithium salt. As the organic solvent, any solvent can be used without particular limitation as long as it can serve as a medium through which ions involved in the electrochemical reaction of the battery can migrate. The lithium salt may be used without particular limitation as long as it is a compound capable of providing lithium ions used in a lithium secondary battery.

In order to improve the lifespan characteristics of the battery, suppress a reduction in battery capacity and improve discharge capacity of the battery, the electrolyte solution may further include, for example, one or more additives such as a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride, in addition to the above electrolyte components. In this case, the additive may be included in an amount of 0.1% by weight to 5% by weight based on the total weight of the electrolyte solution.

Fig. 2 is a flowchart showing a method of manufacturing an electrode for secondary battery according to an embodiment of the present disclosure. Referring to Fig. 2, a method of manufacturing an electrode for secondary battery according to the present embodiment includes a pre-mixing step (S10) of mixing an active material, a conductive material and a binder, a mixing step (S20) of applying a high shearing force to prepare an electrode composition, a step (S30) of manufacturing a freestanding film using the second electrode composition, and a step (S40) of manufacturing an electrode through a lamination process after attaching the freestanding film onto the electrode current collector.

Here, in the pre-mixing step (S10), the active material, the conductive material, and the binder may be dry-mixed. The binder includes a first binder and a second binder, with the first binder and the second binder being different from each other. The second binder is attached to the surface of the first binder.

Hereinafter, the contents of the present disclosure will be described by way of more specific examples. However, the following examples are for illustrative purposes only, and the scope of the present disclosure is not limited thereto.

### <Example 1>

A premixing step (S10) of preparing a mixture in which an active material, a conductive material, and first and second binders were dry-mixed using a Waring blender was performed. Here, the active material is 92 wt% of lithium manganese oxide (LMO), and the conductive material is 2 wt% of Super C65.

The total content of the first binder which is polytetrafluoroethylene(PTFE) and the second binder which is an acrylic polymer is 6% by weight. Here, the content ratio of the first binder 100 and the second binder 200 is 70:30. Further, the glass transition temperature (T_{g}) of the first binder 100 is 34 degrees Celsius, and the glass transition temperature (T_{g}) of the second binder 200 is 55 degrees Celsius. At this time, the premixing step (S10) was performed at room temperature at 5000 rpm for 1 minute.

Subsequently, a mixing step (S20) in which a shearing force was applied to the mixture prepared in the premixing step (S10) to prepare an electrode composition, was performed using a Bench Kneader PBV-0.1L equipment (available from Irie Shokai). At this time, the mixing step (S20) was performed at 100 degrees Celsius at 30 rpm.at 30 rpm for 5 minutes.

### <Example 2>

In Example 1, the content ratio of the first binder 100 and the second binder 200 is 40:60. Also, the glass transition temperature (T_{g}) of the second binder 200 is 40 degrees Celsius. Except for this point, an electrode composition was prepared in the same manner as in Example 1.

### <Example 3>

In Example 1, the active material is 97 wt% of lithium manganese oxide (LMO), and the total content of the first binder 100 and the second binder 200 is 1 wt%. Except for this point, an electrode composition was prepared in the same manner as in Example 1.

### <Example 4>

In Example 1, the active material is 88 wt% of lithium manganese oxide (LMO), and the total content of the first binder 100 and the second binder 200 is 10 wt%. Except for this point, an electrode composition was prepared in the same manner as in Example 1.

### <Example 5>

In Example 1, the glass transition temperature (Tg) of the first binder 100 is 90 degrees Celsius, and the glass transition temperature (Tg) of the second binder 200 is 106 degrees Celsius. Except for this point, an electrode composition was prepared in the same manner as in Example 1.

### <Comparative Example 1>

In Example 1, the active material is 97.5 wt% of lithium manganese oxide (LMO), and the total content of the first binder 100 and the second binder 200 is 0.5 wt%. Except for this point, an electrode composition was prepared in the same manner as in Example 1.

### <Comparative Example 2>

In Example 1, the active material is 86 wt% of lithium manganese oxide (LMO), and the total content of the first binder 100 and the second binder 200 is 12 wt%. Except for this point, an electrode composition was prepared in the same manner as in Example 1.

### <Comparative Example 3>

In Example 1, the content ratio of the first binder 100 and the second binder 200 is 100:0. Also, the glass transition temperature (T_{g}) of the first binder 100 is 25 degrees Celsius. Except for this point, an electrode composition was prepared in the same manner as in Example 1.

### <Comparative Example 4>

In Example 1, the content ratio of the first binder 100 and the second binder 200 is 0: 100. Except for this point, an electrode composition was prepared in the same manner as in Example 1.

### <Comparative Example 5>

In Example 1, the glass transition temperature (T_{g}) of the first binder 100 is -10 degrees Celsius, and the glass transition temperature (T_{g}) of the second binder 200 is -40 degrees Celsius. Except for this point, an electrode composition was prepared in the same manner as in Example 1.

### <Comparative Example 6>

In Example 1, the glass transition temperature (T_{g}) of the first binder 100 is 11 degrees Celsius, and the glass transition temperature (T_{g}) of the second binder 200 is -12 degrees Celsius. Except for this point, an electrode composition was prepared in the same manner as in Example 1.

### <Comparative Example 7>

In Example 1, the glass transition temperature (T_{g}) of the first binder 100 is 110 degrees Celsius, and the glass transition temperature (T_{g}) of the second binder 200 is 120 degrees Celsius. Except for this point, an electrode composition was prepared in the same manner as in Example 1.

### <Experimental Example 1 (Measurement of Tensile Strength)>

Referring to Fig. 2, for the electrode compositions prepared in Examples 1 to 5 and Comparative Examples 1 to 6, respectively, a freestanding film manufacturing step (S30) of manufacturing a freestanding film having a length of 20mm and a width of 20mm was performed using a Roll Mill equipment (available from Inoue MFG). For each manufactured freestanding film, both ends were fixed with a jig, and then the tensile strength of the freestanding film was measured at a speed of 50 mm/min using Instron UTM equipment, respectively. The results are shown in Table 1 below.

**[Table 1]**

| | Composition | | | | | | Maximum tensile strength (kgf/cm²) |
|---|---|---|---|---|---|---|---|
| | Positive electron active material (%) | Conductive material (%) | Binder | | | | |
| | | | Total content (%) | First binder: second binder | Glass transition temperature of the first binder (T_{g}, °C) | Glass transition temperature of the second binder (T_{g}, °C) | |
| Example 1 | 92 | 2 | 6 | 70:30 | 34 | 55 | 17 |
| Example 2 | 92 | 2 | 6 | 40:60 | 34 | 40 | 14 |
| Example 3 | 97 | 2 | 1 | 70:30 | 34 | 55 | 8 |
| Example 4 | 88 | 2 | 10 | 70:30 | 34 | 55 | 31 |
| Example 5 | 92 | 2 | 6 | 70:30 | 90 | 106 | 21 |
| Comparative Example 1 | 97.5 | 2 | 0.5 | 70:30 | 34 | 55 | 3 |
| Comparative Example 2 | 86 | 2 | 12 | 70:30 | 34 | 55 | 36 |
| Comparative Example 3 | 92 | 2 | 6 | 100:0 | 25 | - | 13 |
| Comparative Example 4 | 92 | 2 | 6 | 0:100 | - | 55 | 0 |
| Comparative Example 5 | 92 | 2 | 6 | 70:30 | -10 | -40 | 2 |
| Comparative Example 6 | 92 | 2 | 6 | 70:30 | 11 | -12 | 2 |
| Comparative Example 7 | 92 | 2 | 6 | 70:30 | 110 | 120 | - |

### <Experimental Example 2 (Measurement of Discharge Capacity)>

Referring to Fig. 2, for Examples 1 to 5 and Comparative Examples 1 to 6, the freestanding films manufactured in Experimental Example 1 were roll-pressed on a current collector which is an aluminum foil, and then the loading value was set to 5mAh/cm² and the porosity to 30%. Under these conditions, an electrode manufacturing step (S40) of manufacturing a positive electrode was performed. Then, a coin half cell was manufactured by using a lithium metal having a thickness of 200 um as a negative electrode together with each manufactured positive electrode. Then, for each of the manufactured coin half cells, the discharge capacity value of the first cycle after charging and discharging was calculated under 0.1C/0.1C conditions in the voltage range of 3.0 to 4.3V, and the results are shown in Table 2 below.

**[Table 2]**

| | Composition | | | | | | Initial discharge capacity (mAh) |
|---|---|---|---|---|---|---|---|
| | Positive electron active material (%) | | Binder | | | | |
| | | | Total content (%) | First binder: second binder | Glass transition temperature of the first binder (T_{g}, °C) | Glass transition temperature of the second binder (T_{g}, °C) | |
| Example 1 | 92 | 105.5 | 6 | 70:30 | 34 | 55 | 105.5 |
| Example 2 | 92 | 105.1 | 6 | 40:60 | 34 | 40 | 105.1 |
| Example 3 | 97 | 106.5 | 1 | 70:30 | 34 | 55 | 106.5 |
| Example 4 | 88 | 105 | 10 | 70:30 | 34 | 55 | 105 |
| Example 5 | 92 | 2 | 6 | 70:30 | 90 | 106 | 105.4 |
| Comparat ive Example 1 | 97.5 | 106.7 | 0.5 | 70:30 | 34 | 55 | 106.7 |
| Comparat ive Example 2 | 86 | 102.8 | 12 | 70:30 | 34 | 55 | 102.8 |
| Comparat ive Example 3 | 92 | 103.1 | 6 | 100:0 | 25 | - | 103.1 |
| Comparat ive Example 4 | 92 | Unme asurab le | 6 | 0:100 | - | 55 | Unmeasu rable |
| Comparat ive Example 5 | 92 | 102.8 | 6 | 70:30 | -10 | -40 | 102.8 |
| Comparat ive Example 6 | 92 | 103.3 | 6 | 70:30 | 11 | -12 | 103.3 |
| Comparat ive Example 7 | 92 | Unme asurab le | 6 | 70:30 | 110 | 120 | Unmeasu rable |

### <Experimental Result Analysis>

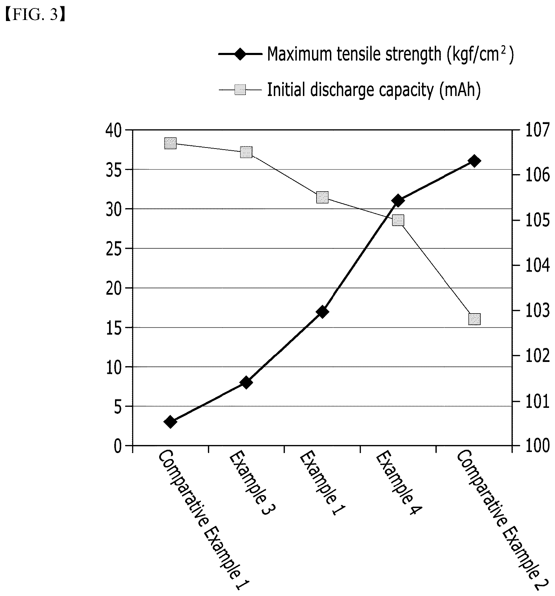

Fig. 3 is a graph for comparing a tensile strength and an initial discharge capacity according to the binder content of an electrode for secondary battery, in Examples and Comparative Examples of the present disclosure. Particularly, Fig. 3 is a graph for comparing the tensile strength and the initial discharge capacity of Example 1, Example 3, Example 4, Comparative Example 1, and Comparative Example 2, respectively, among the results shown in Tables 1 and 2. At this time, in Comparative Example 1, Example 3, Example 1, Example 4, and Comparative Example 2, the content ratio of the first binder and the second binder is the same, wherein the total content of the first binder 100 and the second binder 200 increases in the order of Comparative Example 1, Example 3, Example 1, Example 4, and Comparative Example 2.

In the case of Comparative Example 1, the total content of the first binder 100 and the second binder 200 is 0.5 wt%, which has a smaller content than that of Examples, and in the case of Comparative Example 2, the total content of the first binder 100 and the second binder 200 is 12 wt%, which has a larger content than that of Examples.

Referring to Fig. 3, it can be confirmed that as the total content of the first binder 100 and the second binder 200 increases, the tensile strength becomes excellent, but the initial discharge capacity decreases. That is, when the total content of the first binder 100 and the second binder 200 is too small, there is a problem that the tensile strength is lowered. Further, when the total content of the first binder 100 and the second binder 200 is too large, the resistance of the binder also increases along with the increase of the binder content, which causes a problem that the initial discharge capacity is lowered. Therefore, in the case of having the total content of the first binder 100 and the second binder 200 as in Examples 1, 3, and 4, it can be confirmed that both the tensile strength and the initial discharge capacity are excellent as a whole.

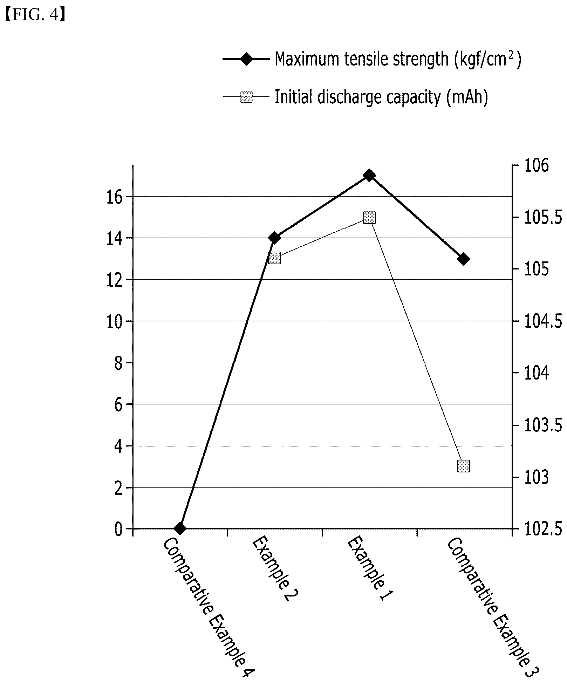

Fig. 4 is a graph for comparing a tensile strength and an initial discharge capacity according to the content ratio of the first binder and the second binder of an electrode for secondary battery, in Examples and Comparative Examples of the present disclosure. Particularly, Fig. 4 is a graph for comparing the tensile strength and initial discharge capacity of Examples 1, 2, Comparative Example 3, and Comparative Example 4, respectively, among the results shown in Tables 1 and 2. At this time, in Example 1, Example 2, Comparative Example 3, and Comparative Example 4, the total contents of the first binder 100 and the second binder 200 are the same, but the content ratios are different from each other. Here, in the order of Comparative Example 4, Example 2, Example 1, and Comparative Example 3, the content of the first binder gradually increases, and the content of the second binder gradually decreases.

Referring to Fig. 4, first, when only the second binder is included in the binder as in Comparative Example 4, it is difficult to manufacture the electrode during dry-mixing, and thus the tensile strength and initial discharge capacity are not measured. Thereby, it can be confirmed that the first binder should be necessarily included in the electrode for secondary battery according to the present disclosure.

Further, referring to Fig. 4, when only the first binder is included in the binder as in Comparative Example 3, it can be confirmed that both the tensile strength and the initial discharge capacity decrease. This is because, when the first binder is used alone, agglomeration phenomenon of the first binder at room temperature occurs, whereby the bridging effect between particles is lowered and the resistance also increases.

Therefore, in the case of having the content ratio of the first binder 100 and the second binder 200 as in Examples 1 and 2, it can be confirmed that both the tensile strength and the initial discharge capacity are excellent as a whole.

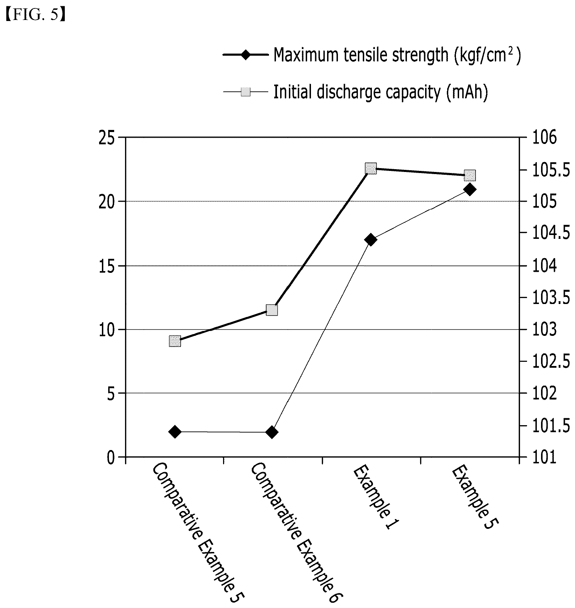

Fig. 5 is a graph for comparing a tensile strength and an initial discharge capacity according to a glass transition temperature of the first binder and the second binder of an electrode for secondary battery, in Examples and Comparative Examples of the present disclosure. Particularly, Fig. 5 is a graph for comparing the tensile strength and the initial discharge capacity of Example 1, Example 5, Comparative Example 5, and Comparative Example 6, respectively, among the results shown in Tables 1 and 2. At this time, in Example 1, Example 5, Comparative Example 5, Comparative Example 6, and Comparative Example 7, both the content and content ratio of the first binder 100 and the second binder 200 are the same, but the glass transition temperatures of the first binder 100 and the second binder 200 are different. Here, the glass transition temperatures of the first binder 100 and the second binder 200 increase in the order of Comparative Example 5, Comparative Example 6, Example 1, Example 5, and Comparative Example 7. At this time, Comparative Example 7 is omitted in Fig. 5 because the tensile strength and the initial discharge capacity are not measured.

Referring to Fig. 5, it can be confirmed as the glass transition temperature of the first binder 100 and the second binder 200 increases, the tensile strength and the initial discharge capacity gradually increase.

That is, when the glass transition temperatures of the first binder 100 and the second binder 200 are too small as in Comparative Examples 5 and 6, the second binder 200 is melted at room temperature and thus, the second binder 200 may not be easily attached to the surface of the first binder 100. Thereby, when the second binder 200 with an excessively small glass transition temperature is included, there is a problem that it becomes difficult to prevent the agglomeration phenomenon of the first binder 100 that occurs at room temperature.

In addition, when the glass transition temperature of the second binder 200 is lower than the glass transition temperature of the first binder 100 as in Comparative Examples 5 and 6, the second binder 200 is melted before the first binder 100, which causes a problem that it is difficult to further prevent the agglomeration phenomenon of the first binder 100.

Further, referring to Tables 1 and 2, when the glass transition temperatures of the first binder 100 and the second binder 200 are too large as in Comparative Example 7, it can be confirmed that the first binder 100 is not fiberized at the process temperature and thus, the tensile strength and the initial discharge capacity are not measured. Thereby, when the first binder 100 and the second binder 200 have a glass transition temperature as in Examples 1 and 5, it can be confirmed that the agglomeration phenomenon of the first binder 100 is effectively prevented, and at the same time, the fiberization is excellently progressed, and thus, both tensile strength and initial discharge capacity are excellent as a whole.

Although the invention has been shown and described above with reference to the preferred embodiments, the scope of the present disclosure is not limited thereto, and numerous other variations and modifications can be devised by those skilled in the art using the principles of the invention defined in the appended claims, which will also fall within the spirit and scope of the present disclosure.

The present disclosure also comprises the following items:
Item 1: An electrode for secondary battery comprising:
   an electrode current collector; and
   an electrode layer located on the electrode current collector,
   wherein the electrode layer comprises an electrode composition in which an active material, a conductive material, and a binder are dry-mixed,
   wherein the binder comprises a first binder and a second binder, with the first binder and the second binder being different from each other, and
   wherein the second binder is attached to the surface of the first binder.
Item 2: The electrode for secondary battery according to claim 1, wherein:
   a glass transition temperature (T_{g}) of the second binder is larger than a glass transition temperature (T_{g}) of the first binder.
Item 3: The electrode for secondary battery according to claim 2, wherein:
   the glass transition temperature (T_{g}) of the first binder is 15 degrees Celsius or more and 100 degrees Celsius or less, and
   the glass transition temperature (T_{g}) of the second binder is 25 degrees Celsius or more and 115 degrees Celsius or less.
Item 4: The electrode for secondary battery according to claim 1, wherein:
   a content of the binder is 0.51 % by weight or more and 11.99% by weight or less based on the total weight of the electrode composition.
Item 5: The electrode for secondary battery according to claim 1, wherein:
   a content ratio of the first binder and the second binder has a ratio of 0.1:10 to 10:0.1.
Item 6: The electrode for secondary battery according to claim 1, wherein:
   the first binder comprises polytetrafluoroethylene (PTFE), and
   the second binder comprises an acrylic polymer material.
Item 7: The electrode for secondary battery according to claim 1, wherein:
   the active material comprises at least one selected from the group consisting of lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound; Fe₂(MoO₄)₃, and lithium manganese oxide (LMO).
Item 8: The electrode for secondary battery according to claim 1, wherein:
   the electrode composition is manufactured into a freestanding film, and
   the freestanding film is attached onto the electrode current collector.
Item 9: The electrode for secondary battery according to claim 8, wherein:
   the freestanding film has a tensile strength of 5kgf/cm² or more and 50kgf/cm² or less.
Item 10: A method of manufacturing an electrode for secondary battery, the method comprising the steps of:
   dry-mixing an active material, a conductive material and a binder to prepare a mixture;
   applying a shearing force to the mixture to prepare an electrode composition;
   manufacturing a freestanding film with the electrode composition; and
   attaching the freestanding film onto the electrode current collector to form an electrode for secondary battery,
   wherein the binder comprises a first binder and a second binder, with the first binder and the second binder being different from each other, and
   wherein the second binder is attached to the surface of the first binder.
Item 11: The method of manufacturing an electrode for secondary battery according to claim 10, wherein:
   a glass transition temperature (T_{g}) of the second binder is larger than a glass transition temperature (T_{g}) of the first binder.
Item 12: The method of manufacturing an electrode for secondary battery according to claim 11, wherein:
   the glass transition temperature (T_{g}) of the first binder is 15 degrees Celsius or more and 100 degrees Celsius or less, and
   the glass transition temperature (T_{g}) of the second binder is 25 degrees Celsius or more and 115 degrees Celsius or less.
Item 13: The method of manufacturing an electrode for secondary battery according to claim 10, wherein:
   the step of dry-mixing an active material, a conductive material and a binder to prepare a mixture is performed at room temperature, and
   the step of applying a shearing force to the mixture to prepare an electrode composition is performed at a temperature of 100 degrees Celsius or more.
Item 14: The method of manufacturing an electrode for secondary battery according to claim 10, wherein:
   the sum of the contents of the first binder and the second binder is 0.51% by weight or more and 11.99% by weight or less based on the total weight of the electrode composition.
Item 15: The method of manufacturing an electrode for secondary battery according to claim 10, wherein:
   a content ratio of the first binder and the second binder has a ratio of 0.1:10 to 10:0.1.
Item 16: The method of manufacturing an electrode for secondary battery according to claim 10, wherein:
   the first binder comprises polytetrafluoroethylene (PTFE), and
   the second binder comprises an acrylic polymer material.
Item 17: The method of manufacturing an electrode for secondary battery according to claim 10, wherein:
   the active material comprises at least one selected from the group consisting of lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound; Fe₂(MoO₄)₃, and lithium manganese oxide (LMO).
Item 18: A secondary battery comprising the electrode for secondary battery as set forth in claim 1.

## Claims

1. An electrode for secondary battery comprising:
an electrode current collector; and
an electrode layer located on the electrode current collector,
wherein the electrode layer comprises an electrode composition in which an active material, a conductive material, and a binder are dry-mixed,
wherein the binder comprises a first binder and a second binder, with the first binder and the second binder being different from each other, and
wherein the second binder is attached to the surface of the first binder;
wherein a glass transition temperature (T_{g}) of the second binder is larger than a glass transition temperature (T_{g}) of the first binder;
the glass transition temperature (T_{g}) of the second binder is room temperature or more and 115 degrees Celsius or less; and
the first binder has a characteristic that the fibers are pulled out from the active material particles as a shearing force is applied.

2. The electrode for secondary battery according to claim 1, wherein:
the first binder includes polytetrafluoroethylene (PTFE).

3. The electrode for secondary battery according to claim 1, wherein:
the glass transition temperature (T_{g}) of the first binder is 15 degrees Celsius or more and 100 degrees Celsius or less, and
the glass transition temperature (T_{g}) of the second binder is 25 degrees Celsius or more and 115 degrees Celsius or less.

4. The electrode for secondary battery according to claim 1, wherein:
a content of the binder is 0.51% by weight or more and 11.99% by weight or less based on the total weight of the electrode composition.

5. The electrode for secondary battery according to claim 1, wherein:
a content ratio of the first binder and the second binder has a ratio of 0.1:10 to 10:0.1.

6. The electrode for secondary battery according to claim 1, wherein:
the first binder comprises polytetrafluoroethylene (PTFE), and
the second binder comprises an acrylic polymer material.

7. The electrode for secondary battery according to claim 1, wherein:
the electrode composition is manufactured into a freestanding film, and
the freestanding film is attached onto the electrode current collector.

8. A method of manufacturing an electrode for secondary battery, the method comprising the steps of:
dry-mixing an active material, a conductive material and a binder to prepare a mixture;
applying a shearing force to the mixture to prepare an electrode composition;
manufacturing a freestanding film with the electrode composition; and
attaching the freestanding film onto the electrode current collector to form an electrode for secondary battery,
wherein the binder comprises a first binder and a second binder, with the first binder and the second binder being different from each other, and
wherein the second binder is attached to the surface of the first binder;
wherein a glass transition temperature (T_{g}) of the second binder is larger than a glass transition temperature (T_{g}) of the first binder;
the glass transition temperature (T_{g}) of the second binder is room temperature or more and 115 degrees Celsius or less; and
the first binder has a characteristic that the fibers are pulled out from the active material particles as a shearing force is applied.

9. The method of manufacturing an electrode for secondary battery according to claim 8, wherein:
the first binder includes polytetrafluoroethylene (PTFE)..

10. The method of manufacturing an electrode for secondary battery according to claim 8, wherein:
the glass transition temperature (T_{g}) of the first binder is 15 degrees Celsius or more and 100 degrees Celsius or less, and
the glass transition temperature (T_{g}) of the second binder is 25 degrees Celsius or more and 115 degrees Celsius or less.

11. The method of manufacturing an electrode for secondary battery according to claim 8, wherein:
the step of dry-mixing an active material, a conductive material and a binder to prepare a mixture is performed at room temperature, and
the step of applying a shearing force to the mixture to prepare an electrode composition is performed at a temperature of 100 degrees Celsius or more.

12. The method of manufacturing an electrode for secondary battery according to claim 8, wherein:
the sum of the contents of the first binder and the second binder is 0.51% by weight or more and 11.99% by weight or less based on the total weight of the electrode composition.

13. The method of manufacturing an electrode for secondary battery according to claim 8, wherein:
a content ratio of the first binder and the second binder has a ratio of 0.1:10 to 10:0.1.

14. The method of manufacturing an electrode for secondary battery according to claim 8, wherein:
the first binder comprises polytetrafluoroethylene (PTFE), and
the second binder comprises an acrylic polymer material.

15. A secondary battery comprising the electrode for secondary battery as set forth in claim 1.
